# EUROPÄISCHE PATENTANMELDUNG

(11) **EP 2 306 047 A2**
(43) Veröffentlichungstag der Anmeldung: **06.04.2011**
(21) Anmeldenummer: 10012016.1
(22) Anmeldetag: 30.09.2010
(51) Int. Cl.: F16H 1/32

(54) **Geräuschreduzierter Antrieb für Stellsysteme**

(30) Priorität: 02.10.2009 DE 102009048047
(71) Anmelder: Hirschmann Automotive GmbH, 6830 Rankweil (AT)
(72) Erfinder: Dengler, Werner, 5132 Geretsberg (AT); Haarländer, Michael, 6832 Sulz (AT)
(74) Vertreter: Greif, Thomas

(57) **Zusammenfassung**

Die Erfindung betrifft einen Stellantrieb (1) mit einer Antriebsseite (AN) und eine Abtriebsseite (AB), aufweisend auf der Antriebsseite (AN) einen Antrieb (3) und zumindest ein Antriebszahnrad (4) umfassende Antriebseinheit (2), sowie zumindest ein mit dem Antriebszahnrad (4) in Wirkverbindung stehendes Abtriebszahnrad (5) auf der Abtriebsseite (AB), wobei erfindungsgemäss vorgesehen ist, dass das Antriebszahnrad (4) auf der Antriebsseite (AN) und das Abtriebszahnrad (5) auf der Abtriebsseite (AB) eine voneinander unterschiedliche Zähnezahl aufweisen und der Antrieb (3) derart ausgebildet ist, dass er das Antriebszahnrad (4) in eine Taumelbewegung versetzt, die bewirkt, dass das Abtriebszahnrad (5) in eine rotatorische Bewegung versetzt wird.

## Beschreibung

Die Erfindung betrifft einen Stellantrieb (Stellsystem) mit einer Antriebsseite und eine Abtriebsseite, aufweisend auf der Antriebsseite eine einen Antrieb und zumindest ein Antriebszahnrad umfassende Antriebselnhelt sowie zumindest ein mit dem Zahnrad in Verbindung stehendes Abtriebszahnrad auf der Abtriebsseite, gemäß den Merkmalen des Oberbegriffes des Patentanspruches 1.

Solche Stellantriebe sind beispielsweise aus der Fahrzeugtechnik bekannt. Als Antrieb kommt ein Elektromotor zur Anwendung, auf dessen Antriebswelle genau ein Zahnrad oder zumindest ein Zahnrad sitzt, wobei dieses Zahnrad mit dem Elektromotor als Antrieb eine Antriebseinheit auf der Antriebsseite bildet. Die von dem Elektromotor bewirkte rotatorische Bewegung des Zahnrades wird auf ein damit in Wirkverbindung stehendes auf der Abtriebsseite angeordnetes Zahnrad übertragen, im Regelfall untersetzt, um eine bestimmte Bewegung eines Elementes eines Fahrzeuges, z. B. ein Fenster, zu bewegen. Das bedeutet, dass nach aktuellern technischem Stand solche Stellsysteme üblicherweise in einer Motor-Getriebe-Kombination ausgeführt sind. Der Einsatz solcher kostenoptimierter Kleinmotoren mit hoher Drehzahl und nachgeschaltetern Getriebe, üblicherweise Schnecken- oder Planetengetriebe, haben vor allen Dingen zwei entscheidende Nachteile. Diese Kombination ist im Regelfall nur selten spielfrei, wobei es eines sehr hohen Aufwandes bedarf, diese Kombination spielfrei zu machen. Außerdem besitzt ein solches Stellsystem durch die erforderliche hohe Drehzahl (die erforderlich ist, um entsprechende Stellkräfte durch eine entsprechende Untersetzung aufbringen zu können), erhebliche Schallpegel, die durch das Zusammenwirken der einzelnen Elemente entstehen, die unerwünscht sind. Dem Einsatz an hochgenauen Stellsystemen wie auch an geräuschselektiven Verbauorten insbesondere in Fahrzeugen sind schnell Grenzen gesetzt.

Der Erfindung liegt daher die Aufgabe zugrunde, einen Stellantrieb dahingehend zu verbessern, der weitestgehend spielfrel ist und zudem nahezu geräuschlos arbeitet.

Diese Aufgabe ist durch die Merkmale des Patentanspruches 1 gelöst.

Erfindungsgemäß ist vorgesehen, dass das genau eine oder zumindest eine Antriebszahnrad auf der Antriebsseite und das Abtriebszahnrad auf der Abtriebsseite eine voneinander unterschiedliche Zähnezahl aufwelsen und der Antrieb derart ausgebildet ist, dass er das Antriebszahnrad in eine rotatorische Taumelbewegung versetzt. Zentraler Lösungsansatz ist somit eine Getriebefunktion, deren Zahnräder (Räder), beispielsweise als Scheiben ausgebildet, eine unterschiedliche Zähnezahl aufwelsen. Je nachdem, welches Zahnrad gegenüber dem anderen Zahnrad die größere oder geringere Zähnezahl aufweist, kann die Untersetzung oder die Übersetzung erzielt werden. Das Prinzip der unterschiedlichen Zahnzahlen ist zwar unter dem Begriff Gleitkeilgetriebe bekannt, wobei sich gegenüber diesen bekannten Gleitkeilgetrieben in überraschender Weise aber herausgestellt hat, dass dann, wenn der Antrieb das Antriebszahnrad zusätzlich zu der unterschiedliche Zähnezahl in eine Taumelbewegung versetzt (was bei Gleitkeilgetrieben nicht der Fall ist), die Reibungsmomente minimiert werden, genauso wie die Geräusche, die bei der Bewegung und der Kraftübertragung zwischen der Antriebsseite und der Abtriebsseite entstehen. Dies ist mit den bekannten Gleitkellgetrieben nicht möglich, sodass zur Lösung der Aufgabe dieser Gleitkeilansatz hierfür gänzlich ungeelgnet ist. Aus dem vorstehend geschilderten Aufbau des erfindungsgemäßen Stellantriebes ergeben sich die Vorteile, dass ein solcher Stellantrieb extrem geräuschreduziert ist und wenig Bauteile aufweist. Außerdem kann er bei entsprechender Auslegung, insbesondere der beteiligten zusammenwirkenden Zahnräder, wahlweise selbsthemmend oder frellaufend aufgebaut werden. Aufgrund der unterschiedlichen Zähnezahl der Zahnräder einerseits auf der Antriebsseite und andererseits auf der Abtriebsseite ist die erwünschte Spielfreiheit gegeben und es sind in besonders vorteilhafter Weise mechanische Toleranzen, insbesondere Herstell- oder Einbautoleranzen, ausgleichbar bzw. vernachlässigbar. Außerdem ist bei dem erfindungsgemäßen Stellantrieb eine hohe Langzeltstabilität gegeben, da er gegenüber den bekannten Gleitkeilgetrieben oder den Taumelgetrieben wesentlich verschleißärmer arbeitet.

Die erfindungsgemäßen Stellantriebe kommen vorzugsweise in der Fahrzeugtechnik zur Anwendung, insbesondere im Motorbereich (z. B. Verstellung eine Drosselklappe, einer Brennkraftmaschine oder von Ventilen), im Abgasbereich (beispielswelse bei der Verstellung von Abgasrückführventilen), im Achsbereich (z. B. Einstellung von Stoßdämpfern oder Federelementen), im Antriebsstrang (z. B. Stellelemente von Getrieben), bei Kilmageräten (z. B. Einstellung von Öffnungsklappen) und bei Lüftungssystemen (auch hler wieder beispielsweise die Verstellung von Klappen der Luftzufuhr). Die vorstehend genannte Aufzählung ist rein beispielhaft und nicht abschließend, So ist es beispielsweise denkbar, dass die erfindungsgemäßen Stellantriebe auch in der Luft- und Raumfahrt und in anderen fahrzeugtechnischen Einrichtungen (wle z. B. Zügen) zur Anwendung kommen können,

Der schematische Aufbau eines erfindungsgemäßen Stellantriebes ist in der einzigen Figur dargestellt und im Folgenden näher erläutert.

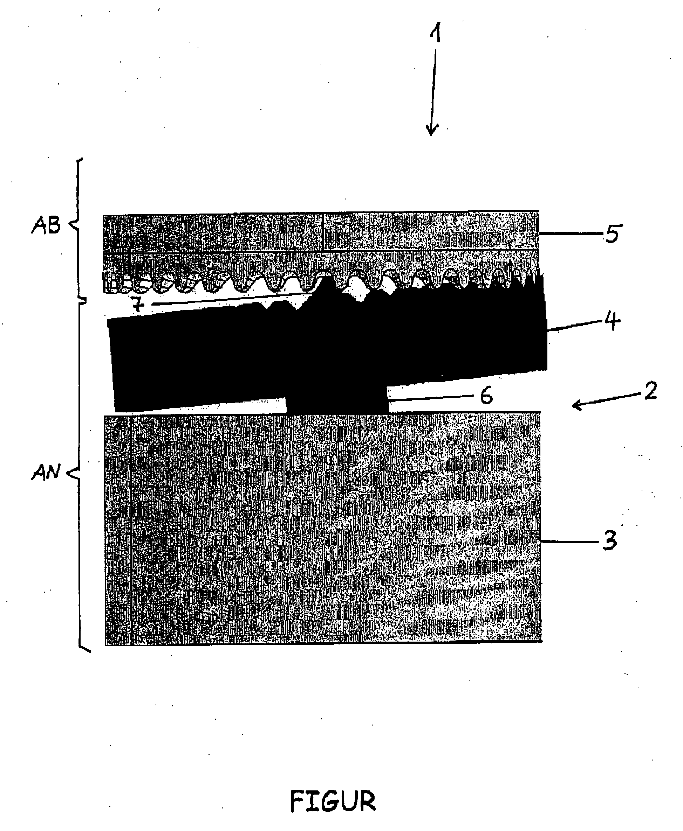

In Figur 1 ist, soweit im Einzelnen dargestellt, ein Stellantrieb 1 gezeigt, der in eine Antriebsseite AN und in eine Abtriebsseite AB gegliedert ist. Auf der Antriebsselte AN ist eine Antriebseinheit 2 vorhanden, die einen Antrieb 3 sowie genau ein oder zumindest ein Antriebszahnrad 4 umfasst. Auf der Abtriebsseite AB ist ein Abtriebszahnrad 5 vorhanden. Weitere nachgeschaltete und mit dem Abtriebszahnrad 5 zusammenwirkende Zahnräder können vorgesehen werden.

Im Regelfall ist der Antrieb 3 ortsfest an seinem Einbauort montiert (angeordnet und befestigt) und treibt das Antriebszahnrad 4 taumelnd, welches in Wirkverbindung mit dem Abtriebszahnrad 5 steht, sodass die resultierend rotatorische Bewegung des Abtriebszahnrades 5 auf ein in der Figur nicht dargestelltes zu verstellendes Element wirkt. Ausgehend von dem Antrieb 3 wird das Abtriebszahnrad 5 also in eine rotatorische Bewegung in einer festen Ebene versetzt, wobei das nicht dargestellte zu verstellende Element von dieser Rotationsbewegung (Drehung) angetrieben wird. Das bedeutet, dass das Abtriebszahnrad 5 Bestandteil dieses zu verstellenden Elementes ist. Alternativ dazu ist es denkbar, dass das Abtriebszahnrad 5 in geeigneter Weise mit dem zu verstellenden Element verbunden ist oder dazwischen noch eine Änderung der Kinematik stattfindet (z. B. Umsetzung der rotatorischen Bewegung des Abtriebszahnrades 5 in eine Linearbewegung oder dergleichen),

Erfindungsgemäß ist im Wesentlichen vorgesehen, dass der Antrieb 3 derart ausgebildet ist, dass er das Antriebszahnrad 4 in eine Taumelbewegung versetzt. Aufgrund der unterschiedlichen Zähnezahl des Antriebszahnrades 4 und des Abtriebszahnrades 5 wird durch die Taumelbewegung des Antriebszahnrades 4 das Abtriebszahnrad 5 in die rotatorische Bewegung versetzt. Hlerbei ist bei der Taumelbewegung des Antriebszahnrades 4 immer ein kleinerer sich rotatorisch weiter bewegender Teil des Antriebszahnrades 4 mit dem rotatorisch folgenden Abtriebszahnrad 5 in Wirkverbindung. Das bedeutet, dass der Antrieb 3 das Antriebszahnrad 4 in eine Taumelbewegung (aber in keine rotatorische Bewegung) versetzt, wobei aus dieser Taumelbewegung des Antriebszahnrades 4 eine Rotation desAbtriebszahnrades 5 in einer festen Ebene resultiert.

Um die Taumelbewegung des Antriebszahnrades 4 erzeugen zu können, ist der Antrieb 3 beispielsweise als elektromagnetischer, als magnetostriktiver oder als elektrostriktiver Antrieb ausgebildet. Gleichzeitig ist auch das Antriebszahnrad 4 derart ausgebildet, dass es mit dem entsprechend ausgebildeten Antrieb 3 so zusammenwirken kann, dass das Antriebszahnrad 4 eine Taumelbewegung ausführt. Bei dem magnetostriktiven Antrieb wird die Magnetostriktion ausgenutzt, bei der es sich um die Deformation ferromagnetischer Stoffe in Folge eines angelegten magnetischen Feldes handelt. Dabei erfährt der Körper bei konstantem Volumen eine elastische Längenänderung, sodass durch ein magnetisches Wechselfeld jeder ferromagnetische Stoff zu mechanischen Schwingungen angeregt wird, wobei diese mechanischen Schwingungen ausgehend von einer an den Antrieb angelegten Steuerspannung zur Erzeugung der Taumelbewegung des Antriebszahnrades 4 ausgenutzt werden.

Bei den elektrostriktiven Antrieben macht man sich die Elektrostriktion zu Nutze, die die Deformation eines die elektrischen Mediums in Abhängigkeit eines angelegten elektrischen Feldes beschreibt. Durch Anwendung eines dieelektrischen Mediums in dem Antrieb 3 und das Anlegen eines entsprechenden elektrischen Feldes wird auch bei diesem elektrostriktiven Antrieb das Antriebszahnrad 4 in die gewünschte Taumelbewegung versetzt, wobei in Abhängigkeit des elektrischen Feldes (bei dem elektrostriktiven Antrieb, hingegen durch Anlegen eines magnetischen Feldes bei dem elektromagnetischen oder magnetostriktiven Antrieb) die Taumelbewegung gesteuert werden kann, wobei aus der gesteuerten Taumelbewegung die Rotation des Abtriebszahnrades 5 (also die Drehzahl) eingestellt werden kann.

In besonders vortellhafter Weise ist das Abtriebszahnrad 4 aus einem magnetisierbaren Kunststoff hergestellt, sodass dieses besonders gut mit dem elektromagnetischen oder dem magnetostriktiven Antrieb zusammenwirken kann. Solche magnetisierbaren Kunststoffe sind bekannt, bei denen beispielsweise einem Kunststoff magnetisierbare Partikel beigemischt werden. Ebenfalls ist es von besonderem Vorteil, dass das Abtriebszahnrad aus Kunststoff, insbesondere wieder dem magnetisierbaren Kunststoff, spritzgegossen ist, da hierdurch die gewünschte Form bel gleichzeltig hoher Stückzahl (vorteilhaft bei der Serienherstellung solcher Zahnräder) realisiert werden kann.

Bei dem Ausführungsbelsplel des Stellantriebes 1 gemäß der einzigen Figur weist das Antriebszahnrad 4 eine Zahnredwelle 6 auf, über die das Antriebszahnrad 4 von dem Antrieb 3 angetrieben wird. Durch das Zusammenspiel des Antriebes 3 mit der Zahnradwelle 6 des Antriebszahnrades 4 kann durch Anlegen einer Steuergröße, insbesondere einer Steuerspannung, an den Antrieb 3 das gewünschte elektrische oder magnetische Feld in dem Antrieb 3 erzeugt werden, welches auf die Zahnradwelle 6 des Antriebszahnrades 4 wirkt und dieses in die gewünschte Taumelbewegung versetzt.

Weiterhin ist vorgesehen, dass das Antriebszahnrad 4 einen in Richtung des Abtriebszahnrades 5 weisenden und mit diesem in Wirkverbindung stehenden Lagerzapfen 7 aufweist. Der Lagerzapfen 7, insbesondere ein spitz oder dornenförmig gestalteter Lagerzapfen 7, greift in eine korrespondierende Ausnehmung in der Mittenachse des Abtriebszahnrades 5 ein, sodass dadurch die beiden Zahnräder 4, 5 derart zueinander gelagert sind, dass das Antriebszahnrad 4 taumeln und das Abtriebszahnrad 5 sich drehen kann. Alternativ kann das Abtriebszahnrad 5 einen solchen Lagerzapfen aufweisen, der in eine korrespondierende Ausnehmung in der Mittenachse des Antriebszahnrades 4 eingrelft. Ergänzend oder alternativ dazu ist es denkbar, dass sowohl das Antriebszahnrad 4 als auch das Abtriebszahnrad 5 an ihrem äußeren radialen Umfang in einer zylinderförmigen Hülse gelagert sind. Der Einsatz einer solchen Hülse hat darüber hinaus auch den Vorteil, dass sie den Antrieb 3 aufnehmen und ein Gehäuse des Stellantriebes 1 bilden kann.

### Bezugszeichenliste:

- 1.: Stellantrieb
- 2.: Antriebseinhelt
- 3.: Antrieb
- 4.: Antriebszahnrad
- 5.: Abtriebszahnrad
- 6.: Zahnradwelle
- 7.: Lagerzapfen
- AN: Antriebsseite
- AB: Abtriebsseite

## Patentansprüche

1. Stellantrieb (1) mit einer Antriebsseite (AN) und eine Abtriebsseite (AB), aufweisend auf der Antriebsseite (AN) einen Antrieb (3) und zumindest ein Antriebszahnrad (4) umfassende Antriebseinheit (2), sowie zumindest ein mit dem Antriebszahnrad (4) in Wirkverbindung stehendes Abtriebszahnrad (5) auf der Abtriebsseite (AB), **dadurch gekennzeichnet, dass** das Antriebszahnrad (4) auf der Antriebsseite (AN) und das Abtriebszahnrad (5) auf der Abtriebsseite (AB) eine voneinander unterschiedliche Zähnezahl aufweisen und der Antrieb (3) derart ausgebildet ist, dass er das Antriebszahnrad (4) in eine Taumelbewegung versetzt, die bewirkt, dass das Abtriebszahnrad (5) in eine rotatorische Bewegung versetzt wird.

2. Stellantrieb (1) nach Anspruch 1, **dadurch gekennzeichnet, dass** der Antrieb (3) als elektromagnetischer Antrieb ausgebildet ist, der mit dem Antriebszahnrad (4) zusammenwirkt und dieses in die Taumelbewegung versetzt.

3. Stellantrieb (1) nach Anspruch 1, **dadurch gekennzeichnet, dass** der Antrieb (3) als magnetostriktiver Antrieb ausgebildet ist, der mit dem Antriebszahnrad (4) zusammenwirkt und dieses in die Taumelbewegung versetzt.

4. Stellantrieb (1) nach Anspruch 1, **dadurch gekennzeichnet, dass** der Antrieb (3) als elektrostriktiver Antrieb ausgebildet ist, der mit dem Antriebszahnrad (4) zusammenwirkt und dieses in die Taumelbewegung versetzt.

5. Stellantrieb (1) nach einem der vorhergehenden Ansprüche, **dadurch gekennzeichnet, dass** das Antriebszahnrad (4) aus einem magnetisierbaren Kunststoff besteht.

6. Stellantrieb (1) nach Anspruch 5, **dadurch gekennzeichnet, dass** das Antriebszahnrad (4) spritzgegossen ist.

7. Stellantrieb (1) nach einem der vorhergehenden Ansprüche, **dadurch gekennzeichnet, dass** das Antriebszahnrad (4) eine Zahnradwelle (8) aufweist, über die das Antriebszahnrad (4) von dem Antrieb (3) angetrieben wird.

8. Stellantrieb (1) nach einem der vorhergehenden Ansprüche, **dadurch gekennzeichnet, dass** das Antriebszahnrad (4) einen in Richtung des Abtriebszahnrades (5) weisenden und mit diesem in Wirkverbindung stehenden Lagerzapfen (7) aufweist.

9. Stellantrieb (1) nach einem der vorhergehenden Ansprüche, **dadurch gekennzeichnet, dass** das Antriebszahnrad (4) und das Abtrlebszahnrad (5) in einer Hülse an ihrem radialen äußeren Umfang gelagert sind.

10. Stellantrieb (1) nach Anspruch 9, **dadurch gekennzeichnet, dass** die Hülse den Antrieb (3) aufnimmt und ein Gehäuse des Stellantriebes (1) bildet.
